(19) Europäisches Patentamt
European Patent Office
Office européen des brevets

(11) Veröffentlichungsnummer: **0 129 513**
**B1**

(12) # EUROPÄISCHE PATENTSCHRIFT

(45) Veröffentlichungstag der Patentschrift: **18.05.88**

(51) Int. Cl.⁴: **C 07 C 125/065**, A 01 N 47/12

(21) Anmeldenummer: **84810290.1**

(22) Anmeldetag: **12.06.84**

(54) **Oxamidsäure-Derivate.**

(30) Priorität: **17.06.83 CH 3332/83**

(43) Veröffentlichungstag der Anmeldung: **27.12.84 Patentblatt 84/52**

(45) Bekanntmachung des Hinweises auf die Patenterteilung: **18.05.88 Patentblatt 88/20**

(84) Benannte Vertragsstaaten: **AT BE CH DE FR GB IT LI NL**

(56) Entgegenhaltungen: **GB-A-1 573 620**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Böger, Manfred, Wilhelm Glock- Strasse 14, D-7858 Weil am Rhein (DE)**
Erfinder: **Drabek, Josef, Dr., Benkenstrasse 12, CH-4104 Oberwil (CH)**

EP 0 129 513 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue am Stickstoff substituierte Oxamidsäure-Ester, ihre Herstellung, ihre Verwendung in der Schädlingsbekämpfung sowie Schädlingsbekämpfungsmittel, welche diese Ester enthalten.

Aus der britischen Patentschrift 1 573 620 sind schon 4-Phenoxy-phenoxy-alkyl-N,N-dialkyl-carbamate mit insektizider und akarizider Wirkung bekannt.

Die erfindungsgemässen Verbindungen entsprechen demgegenüber de Formel I

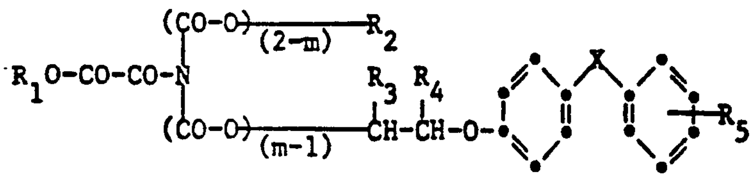

(I),

worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten.

Die für $R_1$ stehenden $C_1$-$C_{10}$-Alkyle können verzweigt oder geradkettig sein. Beispiele solcher Alkyle sind u.a. Methyl und Äthyl sowie Propyl, Butyl, Pentyl, Hexyl, Octyl oder Decyl und ihre Isomeren. Bevorzugt sind dabei $C_1$-$C_6$-Alkyle, unter denen wiederum die $C_1$-$C_4$-Alkyle besonders erwähnt seien.

Die für $R_2$ und $R_5$ stehenden $C_1$-$C_4$-Alkyle, -Alkoxy, -Alkylthio und -Halogenalkyle können verzweigt- oder geradkettig sein. Als Beispiele solcher niederer Alkyle seien Methyl und Äthyl sowie Propyl und Butyl und ihre Isomeren erwähnt, wobei Methyl und Äthyl bevorzugt sind.

Bei den für $R_5$ genannten Halogenen handelt es sich sowohl um Fluor und Chlor als auch um Brom und Jod, wobei Fluor und Chlor bevorzugt sind. Diese Definition für Halogen gilt auch für die $C_1$-$C_4$-Halogenalkyle. Beispiele solcher Halogenalkyle sind u. a. das ein- bis dreifach durch Fluor, Chlor und/oder Brom substituierte Methyl, das ein- bis fünffach durch Fluor, Chlor und/oder Brom substituierte Äthyl oder das ein- bis siebenfach durch Fluor, Chlor und/oder Brom substituierte Propyl.

Unter den Verbindungen der Formel I sind diejenigen bevorzugt, in denen
$R_1$ $C_1$-$C_6$-Alkyl,
$R_2$ $C_1$-$C_4$-Alkyl,
$R_3$ und $R_4$ je Wasserstoff oder Methyl,
$R_5$ Wasserstoff oder Halogen,
X Sauerstoff oder Schwefel und
m die Zahlen 1 oder 2
bedeuten.

Besondere Erwähnung verdienen dabei diejenigen Verbindungen der Formel I, in denen
$R_1$ und $R_2$ je $C_1$-$C_4$-Alkyl,
$R_3$ und $R_4$ je Wasserstoff oder Methyl,
$R_5$ Wasserstoff oder Chlor,
X Sauerstoff oder Schwefel und
m die Zahlen 1 oder 2 bedeuten.

Von vorrangiger Bedeutung sind jedoch diejenigen Verbindungen der Formel I, in denen
$R_1$ und $R_2$ je Methyl oder Äthyl,
$R_3$, $R_4$ und $R_5$ je Wasserstoff,
X Sauerstoff und
m die Zahl 2
bedeuten.

Die Herstellung der erfindungsgemässen Verbindungen erfolgt in an sich bekannter Weise z. B. durch Umsetzen eines Carbaminsäure-Esters der Formel II

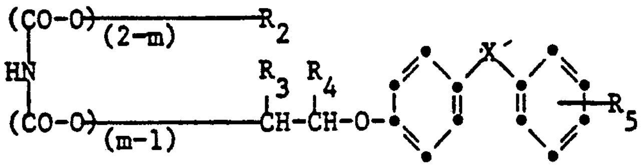

(II)

mit einem Oxalsäure-Esterchlorid der Formel III

$R_1O$-CO-CO-Hal (III)

In den Formeln II und III haben $R_1$, $R_2$, $R_3$, $R_4$, $R_5$, X und m die für Formel I angegebene Bedeutung, und Hal steht für Fluor, Chlor oder Brom. Die Umsetzung erfolgt zweckmässigerweise in Gegenwart eines inerten Verdünnungsmittels, vorzugsweise eines organischen Lösungsmittels und gegebenenfalls einer basischen Substanz. Im allgemeinen wird zwischen 0° C und der Siedetemperatur des Reaktionsgemisches, vorzugsweise zwischen Raumtemperatur und der Siedetemperatur, gearbeitet.

Als inerte organische Lösungsmittel kommen vor allem in Betracht:

a) Äther und ätherartige Verbindungen wie z. B. Diäthyläther, 1,2-Di-methoxyäthan, tert.-Butylmethyläther, Dioxan oder Tetrahydrofuran;

b) Kohlenwasserstoffe wie z. B. n-Hexan, Benzol, Toluol oder Xylole;

c) halogenierte Kohlenwasserstoffe wie z. B. Methylenchlorid, Äthylenchlorid, Chloroform oder Tetrachlorkohlenstoff; d) Ketone wie z. B. Aceton, 2-Butanon oder 3-Pentanon; e) Nitrile wie z. B. Acetonitril oder Propionitril; f) Formamide wie z. B. Dimethylformamid.

Geeignete basische Substanzen sind anorganische oder organische Säurebindemittel wie z. B. Alkali- oder Erdalkalicarbonate und -bicarbonate, insbesondere Natrium- oder Kaliumcarbonat oder Natriumbicarbonat, niedere tertiäre Alkylamine, insbesondere Trimethylamin, Cycloalkylamine, insbesondere Pyridin oder 1,4-Diaza-bicyclo(2,2,2)octan.

Die als Ausgangsmaterialien verwendeten Verbindungen der Formeln II und III sind bekannt oder können nach bekannten Methoden z. B. aus den entsprechenden Carbonsäurehalogeniden und Aminen hergestellt werden.

Die erfindungsgemässen Verbindungen sind bei günstiger Warmblüter- und Pflanzenverträglichkeit wertvolle Wirkstoffe in der Schädlingsbekämpfung. So eignen sich die Verbindungen der Formel I z. B. zur Bekämpfung von Schädlingen an Tieren und Pflanzen. Solche Schädlinge gehören hauptsächlich dem Stamm der Arthropoden an, wie insbesondere Insekten der Ordnungen Lepidoptera, Coleoptera, Homoptera, Heteroptera, Diptera, Thysanoptera, Orthoptera, Anoplura, Siphonaptera, Mallophaga, Thysanura, Isoptera, Psocoptera oder Hymenoptera und Arachniden der Ordnung Acarina wie z. B. Milben und Zecken. Dabei kann jedes Entwicklungsstadium der Schädlinge bekämpft werden, d. h. sowohl die Adulten, Puppen und Nymphen als auch insbesondere die Larven und Eier. So können vor allem Larven und Eier von phytophagen Schadinsekten und -milben in Zier- und Nutzpflanzungen, wie z. B. in Baumwoll- und Gemüsepflanzungen und insbesondere in Obstpflanzungen, wirkungsvoll bekämpft werden. Werden Verbindungen der Formel I von Imagines aufgenommen, so kann sich ihre Wirkung in unmittelbarer Abtötung der Schädlinge zeigen oder aber in verminderter Eiablage und/oder Schlupfrate. Die letztere Erscheinung kann insbesondere bei Coleopteren beobachtet werden. Bei der Bekämpfung von tierparasitären Schädlingen, insbesondere an Haus- und Nutztieren, kommen vor allem Ektoparasiten wie z. B. Milben und Zecken und Dipteren wie z. B. Lucilia sericata in Betracht.

Die Wirkung der erfindungsgemässen Verbindungen bzw. der sie enthaltenden Mittel lässt sich durch Zusatz von anderen Insektiziden und/oder Akariziden wesentlich verbreitern und an gegebene Umstände anpassen. Amen z. B. organische Phosphorverbindungen, Nitrophenole und Derivate, Formamidine, Harnstoffe, Carbamate, Pyrethroide, chlorierte Kohlenwasserstoffe und Bacillus thuringiensis-Präparate in Betracht.

Mit besonderem Vorteil kann man die Verbindungen der Formel I auch mit Substanzen kombinieren, welche einen Pestizid verstärkenden Effekt ausüben. Beispiele solcher Verbindungen sind u.a. Piperonylbutoxid, Propinyläther, Propinyloxime, Propinylcarbamate und Propinylphosphonate, 2-(3,4-Methylendioxyphenoxy)-3,6,9-trioxaundecan oder S,S,S-Tributylphosphorotrithioate.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten oder auch Verkapselungen in z. B. polymeren Stoffen in bekannter Weise verarbeitet. Die Anwendungsverfahren, wie Versprühen, Vernebeln, Verstäuben, Verstreuen oder Giessen, werden ebenso wie die Mittel den angestrebten Zielen und den gegebenen Verhältnissen entsprechend gewählt.

Die Formulierungen d. h. die den Wirkstoff der Formel I bzw. Kombinationen dieser Wirkstoffe mit andern Insektiziden oder Akariziden, und gegebenenfalls einen festen oder flüssigen Zusatzstoff enthaltenden Mittel, Zubereitungen oder Zusammensetzungen, werden in bekannter Weise hergestellt, z. B. durch inniges Vermischen und/oder Vermahlen der Wirkstoffe mit Streckmitteln, wie z. B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$

bis $C_{12}$, wie z. B. Xylolgemische oder substituierte Naphthaline, Phthalsäureester, wie Dibutyl- oder Dioctylphthalat, aliphatische Kohlenwasserstoffe, wie Cyclohexan, Paraffine, Alkohole und Glykole sowie deren Äther und Ester, wie Äthanol, Äthylenglykol, Äthylenglykolmonomethyl- oder -äthyläther, Ketone, wie Cyclohexanon, stark polare Lösungsmittel, wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl, oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäuren oder hochdisperse saugfähige Polymerisate zugesetzt werden.

Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur, wie insbesondere Dolomit oder zerkleinerte Pflanzenrückstände, verwendet werden.

Als oberflächenaktive Verbindungen kommen je nach der Art des zu formulierenden Wirkstoffes der Formel I oder der Kombination dieser Wirkstoffe mit anderen Insektiziden oder Akariziden nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen als auch wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Öl- oder Stearinsäure, oder von natürlichen Fettsäuregemischen, die z. B. aus Kokosnuss- oder Tallöl gewonnen werden können. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen im allgemeinen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit etwa 8-22 C-Atomen. Arylalkylsulfonate sind z. B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes. Ferner kommen auch entsprechende Phosphate, wie z. B. Salze des Phosphorsäureesters eines P-Nonylphenol-(4-14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können. Weiterhin geeignete nichtionische Tenside sind die wasserlöslichen 20 bis 250 Äthylenglykoläthergruppen und 10 bis 100 Propylenglykoläthergruppen enthaltenden Polyäthylenoxid-Addukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykol-Einheiten.

Als Beispiele nichtionischer Tenside seien Nonylphenolpolyäthoxyäthanole, Ricinusölpolyglykoläther, Polypropylen-Polyäthylenoxid-Addukte, Tributylphenoxypolyäthoxyäthanol, Polyäthylenglykol und Octylphenoxypolyäthoxyäthanol erwähnt. Ferner kommen auch Fettsäureester von Polyoxyäthylensorbitan, wie das Polyoxyäthylensorbitantrioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyl-di-(2-chloräthyl)-äthylammoniumbromid.

Die in der Formulierungstechnik gebräuchlichen Tenside sind u. a. in den folgenden Publikationen beschrieben:

"Mc Cutcheon's Detergents and Emulsifiers Annual" MC Publishing Corp., Ridgewood, New Jersey, 1981; Dr. Helmut Stache "Tensid-Taschenbuch", Carl Hanser Verlag München/Wien 1981.

Die pestiziden Zubereitungen enthalten in der Regel 0,1 bis 99 %, insbesondere 0,1 bis 95 %, Wirkstoff der Formel I oder Kombinationen dieser Wirkstoffe mit andern Insektiziden oder Akariziden, 1 bis 99,9 % eines festen oder flüssigen Zusatzstoffes und 0 bis 25 %, insbesondere 0,1 bis 20 %, eines Tensides. Während als Handelsware eher konzentrierte Mittel bevorzugt werden, verwendet der Endverbraucher in der Regel verdünnte Zubereitungen, die wesentlich geringere Wirkstoffkonzentrationen aufweisen.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

**Formulierungsbeispiele für flüssige Wirkstoffe der Formel I oder Kombinationen dieser Wirkstoffe mit andern Insektiziden oder Akariziden (% = Gewichtsprozente)**

| 1. Emulsions-Konzentrate | a) | b) | c) |
|---|---|---|---|
| Wirkstoff oder Wirkstoffkombination | 25 % | 40 % | 50 % |
| Ca-Dodecylbenzolsulfonat | 5 % | 8 % | 6 % |
| Ricinusölpolyäthylenglykoläther (36 Mol AeO) | 5 % | - | - |
| Tributylphenolpolyäthylenglyokoläther (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff oder Wirkstoffkombination | 80 % | 10 % | 5 % | 95 % |
| Äthylenglykolmonomethyläther | 20 % | - | - | - |
| Polyäthylenglykol MG 400 | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 3. Granulate | a) | b) |
|---|---|---|
| Wirkstoff oder Wirkstoffkombination | 5 % | 10 % |
| Kaolin | 94 % | |
| Hochdisperse Kieselsäure | 1 % | - |
| Attapulgit | - | 90 % |

Der Wirkstoff oder die Wirkstoffkombination wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff oder Wirkstoffkombination | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff oder der Wirkstoffkombination erhält man gebrauchsfertige Stäubemittel.

**Formulierungen für feste Wirkstoffe der Formel I resp. Kombinationen dieser Wirkstoffe mit anderen Insektiziden oder Akariziden (% = Gewichtsprozente)**

| 5. Spritzpulver | a) | b) | c) |
|---|---|---|---|
| Wirkstoff oder Wirkstoffkombination | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10% |
| Octylphenolpolyäthylenglykoläther (7-8 Mol AeO) | - | 2 % | - |
| Hochdisperse Kieselsäure | 5 % | 10 % | 10 % |
| Kaolin | 62 % | 27 % | - |

Der Wirkstoff oder die Wirkstoffkombination wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff oder Wirkstoffkombination | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff oder Wirkstoffkombination | 5 % | 8 % |
| Talkum | 95 % | - |
| Kaolin | - | 92 % |

Man erhält anwendungsfertige Stäubemittel, indem der Wirkstoff oder die Wirkstoffkombination mit dem Träger vermischt und auf einer geeigneten Mühle vermahlen wird.

8. Extruder-Granulat

| | |
|---|---|
| Wirkstoff oder Wirkstoffkombination | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert, granuliert und anschliessend im Luftstrom getrocknet.

9. Umhüllungs-Granulat

| | |
|---|---|
| Wirkstoff oder Wirkstoffkombination | 3 % |
| Polyäthylenglykol (MG 200) | 3 % |
| Kaolin | 94 % |

Der fein gemahlene Wirkstoff oder die Wirkstoffkombination wird in einem Mischer auf das mit Polyäthylenglykol angefeuchtete Kaolin gleichmässig aufgetragen. Auf diese Weise erhält man staubfreie Umhüllungs-Granulate.

10. Suspensions-Konzentrat

| | |
|---|---|
| Wirkstoff oder Wirkstoffkombination | 40 % |
| Äthylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 %-ige wässrige Formaldehyd-Lösung | 0,2 % |
| Silikonöl in Form einer 75 %-igen wässrigen Emulsion | 0,8 % |
| Wasser | 32 % |

Der fein gemahlene Wirkstoff oder die Wirkstoffkombination wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

In den nachfolgenden biologischen Beispielen bedeutet eine gute Wirkung, dass der erwünschte Effekt zu mindestens 50 bis 60 % eintritt.

**Beispiel 1: Herstellung von N-Äthoxycarbonyl-N- 2-(4-phenoxyphenoxy)äthyl-oxamidsäure-methylester**

7,5 g 2-(4-Phenoxyphenoxy)-äthyl-carbaminsäure-äthylester werden in 80 ml Äthylenchlorid gelöst. Diese Lösung wird mit 5,0 g Oxalsäuremonomethylesterchlorid versetzt und während 6 Stunden unter leichtem Rückfluss gerührt. Das Reaktionsgemisch wird eingedampft und der Rückstand in Dichlormethan aufgenommen. Diese Lösung wird mit kaltem Wasser gewaschen, über Natriumsulfat getrocknet und schliesslich auf einen Fünftel eingeengt. Nach Chromatographie an Kieselgel mit Dichlormethan als Elutionsmittel erhält man die Verbindung der Formel

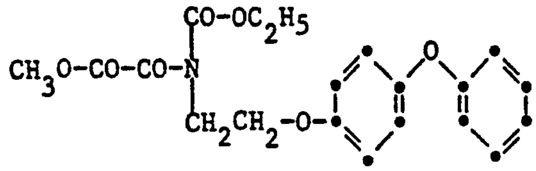

Verbindung Nr. 1.1

als hellgelbes Öl mit einem Brechungsindex von $n^{20}_D = 1{,}5419$.
In Analogie zum obigen Verfahren erhält man auch die folgenden Verbindungen:

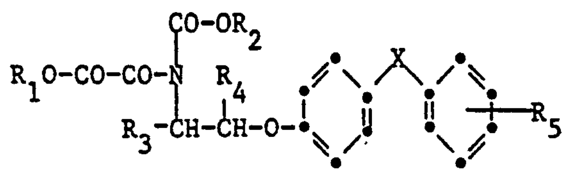

| Verb. Nr. | $R_1$ | $R_2$ | $R_3$ | $R_4$ | $R_5$ | X | physik. Daten |
|---|---|---|---|---|---|---|---|
| 1.2 | $CH_3$ | $CH_3$ | H | H | H | O | $n^{20}_D$ : 1,5486 |
| 1.3 | $CH_3$ | $C_2H_5$ | H | H | H | S | $n^{20}_D$ : 1,5694 |
| 1.4 | $C_2H_5$ | $C_2H_5$ | H | H | H | O | $n^{20}_D$ : 1,5369 |

**Beispiel 2: Herstellung von N-Äthyl-N-2-(4-phenoxyphenoxy)-äthoxy-carbonyl-oxamidsäure-äthylester**

9,0 g N-Äthyl-carbaminsäure-2-(4-phenoxyphenoxy)-äthylester werden in 90 ml Äthylenchlorid gelöst. Diese Lösung wird mit 9,6 g Oxalsäuremonoäthylesterchlorid versetzt und während 10 Stunden unter leichtem Rückfluss gerührt. Das erkaltete Reaktionsgemisch wird in 200 ml Eiswasser gegossen, und die organische Phase abgetrennt. Diese wird mit kaltem Wasser gewaschen, über Natriumsulfat getrocknet, eingeengt und in Dichlormethan aufgenommen. Nach Chromatographie an Kieselgel mit Dichlormethan als Elutionsmittel erhält man die Verbindung der Formel

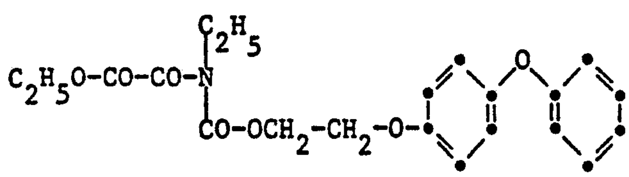

Verbindung Nr. 2.1

in Form von weissen Kristallen mit einem Smp. von 56-58°c.
In Analogie zum obigen Verfahren erhält man auch die folgenden Verbindungen

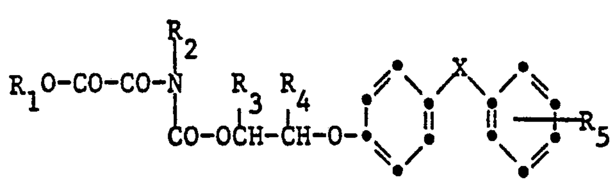

| Verb. Nr. | $R_1$ | $R_2$ | $R_3$ | $R_4$ | $R_5$ | X | Physik. Daten |
|---|---|---|---|---|---|---|---|
| 2.2 | $CH_3$ | $CH_3$ | H | H | H | O | $n^{20}_D$ : 1,5508 |
| 2.3 | $CH_3$ | $C_2H_5$ | H | H | H | O | Smp. 63-64°C |
| 2.4 | $CH_3$ | $C_2H_5$ | H | H | H | S | Smp. 49-51°C |
| 2.5 | $C_2H_5$ | $CH_3$ | H | H | H | O | Smp. 60-60°C |
| 2.6 | $C_2H_5$ | $C_2H_5$ | H | H | H | S | $n^{20}_D$ : 1,5632 |
| 2.7 | $CH_3$ | $C_2H_5$ | H | H | 4-Cl | O | $n^{20}_D$ : 1,5494 |
| 2.8 | $CH_3$ | $C_2H_5$ | $CH_3$ | H | H | O | $n^{20}_D$ : 1,5348 |
| 2.9 | $CH_3$ | $C_2H_5$ | H | $CH_3$ | H | O | $n^{20}_D$ : 1,5376 |
| 2.10 | $CH_3$ | $C_2H_5$ | H | $CH_3$ | H | S | $n^{20}_D$ : 1,5653 |
| 2.11 | $CH_3$ | $C_4H_9$-n | H | H | H | O | $n^{21}_D$ : 1,5342 |

**Beispiel 3: Wirkung auf Laspeyresia pomonella (Eier)**

Abgelegte Eier von Laspeyresia pomonella, die nicht älter als 24 Stunden sind, werden auf Filterpapier für 1 Minute in eine acetonisch-wässrige Lösung, enthaltend 0,75, 12,5, 100 und 400 ppm des zu prüfenden Wirkstoffes, eingetaucht. Nach dem Antrocknen der Lösung werden die Eier in Petrischalen ausgelegt und bei einer Temperatur von 28°C belassen. Nach 6 Tagen wird der prozentuale Schlupf aus den behandelten Eiern bewertet.

Die Verbindungen Nr. 1.1, 1.2, 1.3, 1.4, 2.2, 2.4, 2.5 und 2.7 zeigen 100 % Wirkung (Mortalität) in obigem Test bereits bei einer Wirkstoffkonzentration von 0,75 ppm.

**Beispiel 4: Reproduktions-Beeinflussung von Anthonomus grandis**

Adulte Anthonomus grandis, die vor nicht länger als 24 Stunden geschlüpft sind, werden in Gruppen zu jeweils 25 Käfern in Käfige mit Gitterwänden überführt. Die mit den Käfern besetzten Käfige werden sodann während 5 bis 10 Sekunden in eine acetonische Lösung, enthaltend 1,0 Gew.% des zu prüfenden Wirkstoffes, eingetaucht.

Nachdem die Käfer wieder trocken sind, werden sie zur Kopulation und Eiablage in abgedeckte und Futter enthaltende Schalen eingesetzt. Abgelegte Eier werden zwei- bis dreimal wöchentlich mit fliessendem Wasser ausgeschwemmt, gezählt, durch zwei- bis dreistündiges Einlegen in ein wässriges Desinfektionsmittel desinfiziert und dann in Schalen, die eine geeignete Larvaldiät enthalten, deponiert. Nach 7 Tagen wird untersucht, ob sich aus den deponierten Eiern Larven entwickelt haben.

Zur Ermittlung der Dauer des die Reproduktion beeinflussenden Effektes der zu prüfenden Wirkstoffe wird die Eiablage der Käfer während eines Zeitraumes von etwa 4 Wochen überprüft. Die Bonitierung erfolgt anhand der Verminderung der Anzahl abgelegter Eier und der daraus geschlüpften Larven im Vergleich zu unbehandelten Kontrollen.

Verbindungen gemäss den Beispielen 1 und 2 zeigen eine gute reproduktionsreduzierende Wirkung im obigen Test.

**Patentansprüche** für die Vertragsstaaten BE CH DE FR GB IT LI NL

1 Verbindungen der Formel I

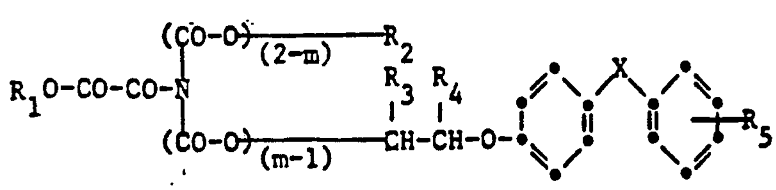

(I),

worin

$R_1$ $C_1$-$C_{10}$-Alkyl,

$R_2$ $C_1$-$C_4$-Alkyl,

$R_3$ und $R_4$ je Wasserstoff oder Methyl,

$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,

X Sauerstoff oder Schwefel und

m die Zahlen 1 oder 2
bedeuten.

2. Verbindungen der Formel I gemäss Anspruch 1, worin
$R_1$ $C_1$-$C_6$-Alkyl,
$R_2$ $C_1$-$C_4$-Alkyl,
$R_3$ und $R_4$ je Wasserstoff oder Methyl,
$R_5$ Wasserstoff oder Halogen,
X Sauerstoff oder Schwefel und
m die Zahlen 1 oder 2
bedeuten.

3. Verbindungen der Formel 1 gemäss einem der Ansprüche 1 oder 2, worin
$R_1$ und $R_2$ je $C_1$-$C_4$-Alkyl,
$R_3$ und $R_4$ je Wasserstoff oder Methyl,
$R_5$ Wasserstoff oder Chlor,
X Sauerstoff oder Schwefel und
m die Zahlen 1 oder 2
bedeuten.

4. Verbindungen der Formel I gemäss einem der Ansprüche 1 bis 3, worin
$R_1$ und $R_2$ je Methyl oder Äthyl,
$R_3$, $R_4$ und $R_5$ je Wasserstoff
X Sauerstoff und
m die Zahl 2
bedeuten.

5. Verbindung gemäss Anspruch 3 der Formel

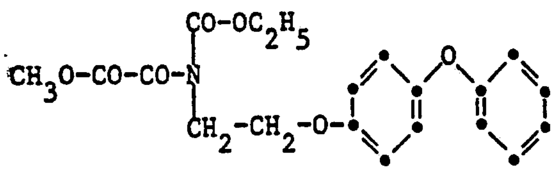
.

6. Verbindung gemäss Anspruch 3 der Formel

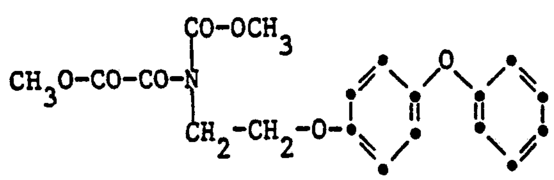
.

7. Verbindung gemäss Anspruch 3 der Formel

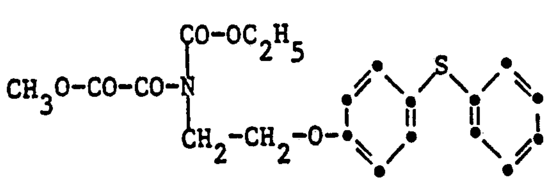
.

8. Verbindung gemäss Anspruch 3 der Formel

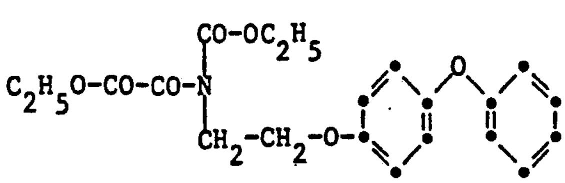
.

9. Verbindung gemäss Anspruch 3 der Formel

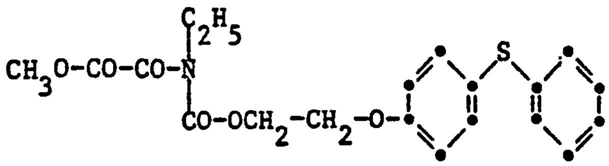 .

10. Verbindung gemäss Anspruch 3 der Formel

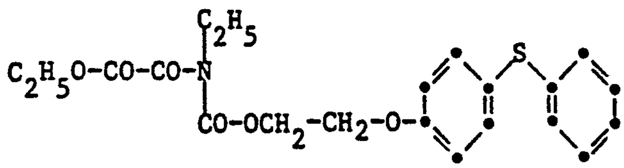 .

11. Verbindung gemäss Anspruch 3 der Formel

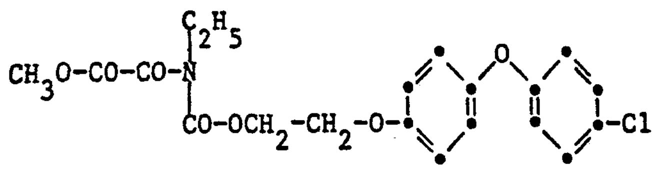 .

12. Verbindung gemäss Anspruch 3 der Formel

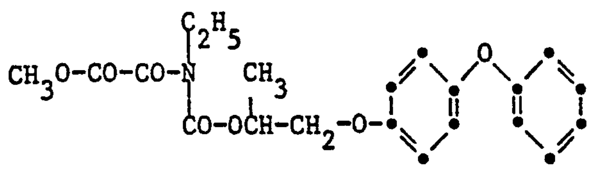 .

13. Verbindung gemäss Anspruch 3 der Formel

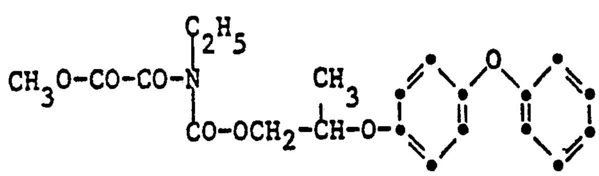 .

14. Verbindung gemäss Anspruch 3 der Formel

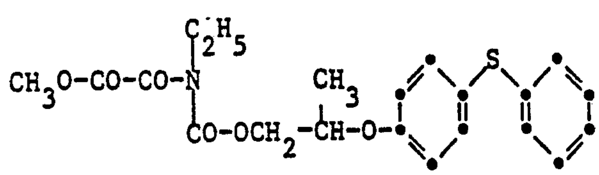 .

15. Verbindung gemäss Anspruch 4 der Formel

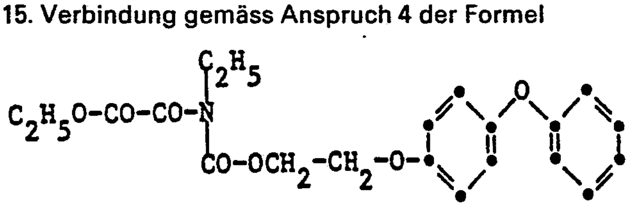 .

16. Verbindung gemäss Anspruch 4 der Formel

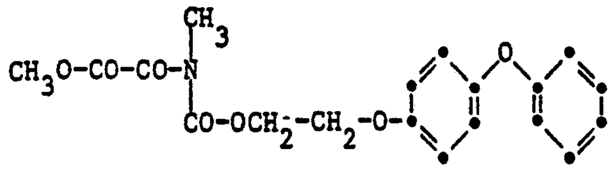

.

17. Verbindung gemäss Anspruch 4 der Formel

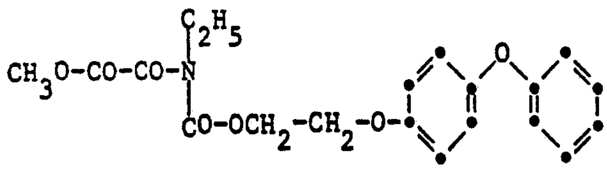

.

18. Verbindung gemäss Anspruch 4 der Formel

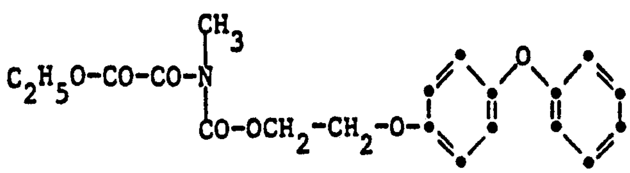

.

19. Verfahren zur Herstellung einer Verbindung der Formel I

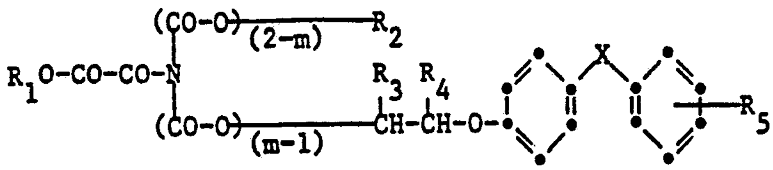

(I),

worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten,
dadurch gekennzeichnet, dass man eine Verbindung der Formel II

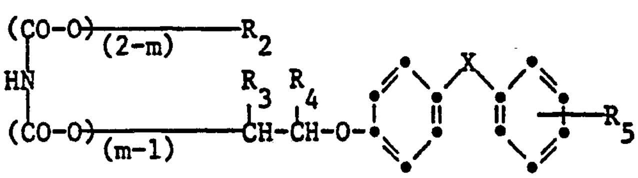

(II)

mit einer Verbindung der Formel III
$R_1O$-CO-CO-Hal (III)
umsetzt, wobei in den Formeln II und III die Symbole $R_1$, $R_2$, $R_3$, $R_4$, $R_5$, X und m die für Formel I angegebene Bedeutung haben und Hal für Halogen, vorzugsweise Chlor, steht.

20. Schädlingsbekämpfungsmittel, welches als aktive Komponente eine Verbindung der Formel I

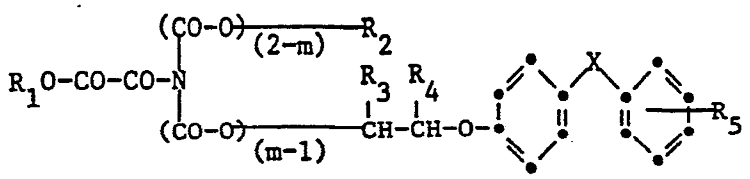

(I)

enthält, worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten, zusammen mit geeigneten Trägern und/oder Zuschlagstoffen.

21. Schädlingsbekämpfungsmittel gemäss Anspruch 20, welche als aktive Komponente eine Verbindung gemäss einem der Ansprüche 2 bis 18 enthält.

22. Verwendung einer Verbindung der Formel I

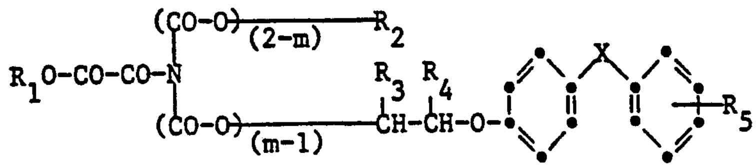

(I)

worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten, zur Bekämpfung von Schädlingen an Tieren und Pflanzen.

23. Verwendung gemäss Anspruch 22 einer Verbindung gemäss einem der Ansprüche 2 bis 18.

24. Verwendung gemäss einem der Ansprüche 22 und 23 zur Bekämpfung von Arthropoden, insbesondere Insekten und Arachniden.

25. Verwendung gemäss Anspruch 24 zur Bekämpfung von Larven und Eiern phytophager Schadinsekten und -milben.

26. Verfahren zum Bekämpfen von Schädlingen an Tieren und Pflanzen, dadurch gekennzeichnet, dass man die Schädlinge in ihren verschiedenen Entwicklungsstadien mit einer Verbindung der Formel I

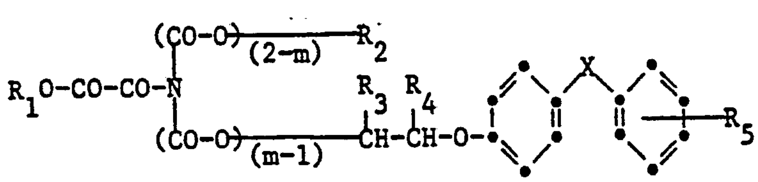

(I)

in Kontakt bringt, worin
$R_1$ $C_1$-$C_{10}$-Alkyl,
$R_2$ $C_1$-$C_4$-Alkyl,
$R_3$ und $R_3$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten.

**Patentansprüche** für den Vertragsstaat AT

1. Schädlingsbekämpfungsmittel, welches als aktive Komponente eine Verbindung der Formel I

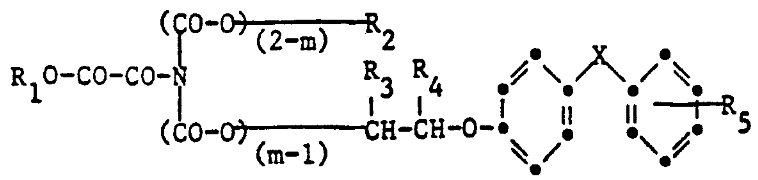

(I)

enthält,
worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten, zusammen mit geeigneten Trägern und/oder Zuschlagstoffen.

2. Schädlingsbekämpfungsmittel gemäss Anspruch 1, welches als aktive Komponente eine Verbindung der Formel I enthält, worin
$R_1$ $C_1$-$C_6$-Alkyl,
$R_2$ $C_1$-$C_4$-Alkyl,
$R_3$ und $R_4$ je Wasserstoff oder Methyl,
$R_5$ Wasserstoff oder Halogen,
X Sauerstoff oder Schwefel und
m die Zahlen 1 oder 2
bedeuten.

3. Schädlingsbekämpfungsmittel gemäss einem der Ansprüche 1 oder 2, welches als aktive Komponente eine Verbindung der Formel I enthält, worin
$R_1$ und $R_2$ je $C_1$-$C_4$-Alkyl,
$R_3$ und $R_4$ je Wasserstoff oder Methyl,
$R_5$ Wasserstoff oder Chlor,
X Sauerstoff oder Schwefel und
m die Zahlen 1 oder 2
bedeuten.

4. Schädlingsbekämpfungsmittel gemäss einem der Ansprüche 1 bis 3, welches als aktive Komponente eine Verbindung der Formel I enthält, worin
$R_1$ und $R_2$ je Methyl oder Äthyl,
$R_3$, $R_4$ und $R_5$ je Wasserstoff
X Sauerstoff und
m die Zahl 2
bedeuten.

5. Schädlingsbekämpfungsmittel gemäss Anspruch 3, welches als aktive Komponente die Verbindung der Formel

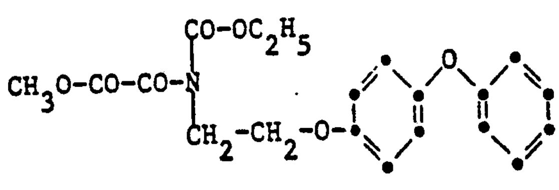

enthält.

6. Schädlingsbekämpfungsmittel gemäss Anspruch 3, welches als aktive Komponente die Verbindung der Formel

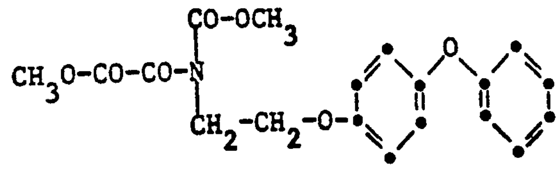

enthält.

7. Schädlingsbekämpfungsmittel gemäss Anspruch 3, welches als aktive Komponente die Verbindung der Formel

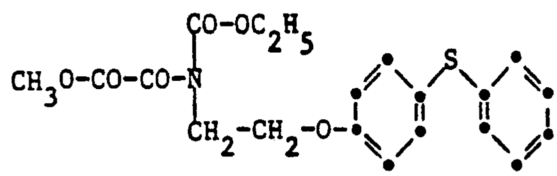

enthält.

8. Schädlingsbekämpfungsmittel gemäss Anspruch 3, welches als aktive Komponente die Verbindung der Formel

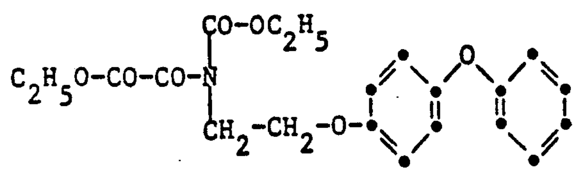

enthält.

9. Schädlingsbekämpfungsmittel gemäss Anspruch 3, welches als aktive Komponente die Verbindung der Formel

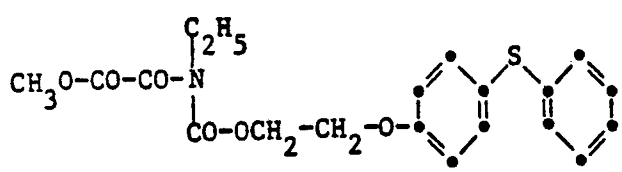

enthält.

10. Schädlingsbekämpfungsmittel gemäss Anspruch 3, welches als aktive Komponente die Verbindung der Formel

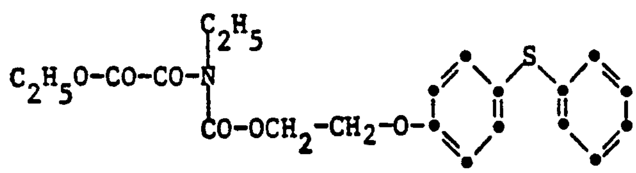

enthält.

11. Schädlingsbekämpfungsmittel gemäss Anspruch 3, welches als aktive Komponente die Verbindung der Formel

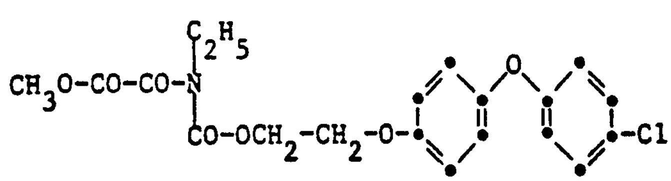

enthält.

12. Schädlingsbekämpfungsmittel gemäss Anspruch 3, welches als aktive Komponente die Verbindung der

Formel

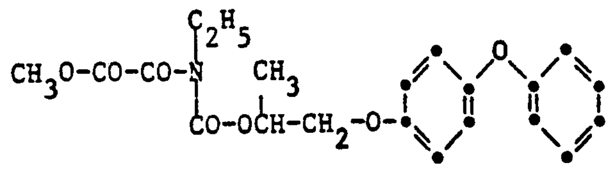

enthält.

13. Schädlingsbekämpfungsmittel gemäss Anspruch 3, welches als aktive Komponente die Verbindung der Formel

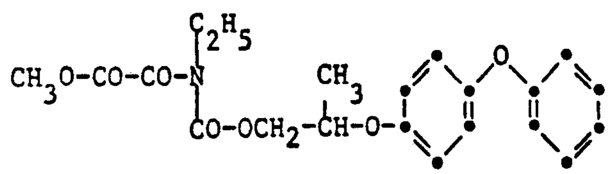

enthält.

14. Schädlingsbekämpfungsmittel gemäss Anspruch 3, welches als aktive Komponente die Verbindung der Formel

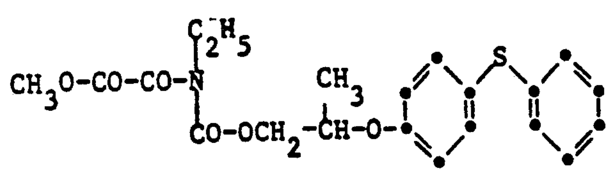

enthält.

15. Schädlingsbekämpfungsmittel gemäss Anspruch 4, welches als aktive Komponente die Verbindung der Formel

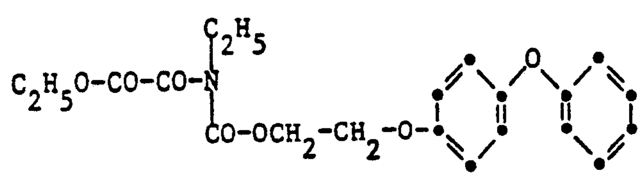

enthält.

16. Schädlingsbekämpfungsmittel gemäss Anspruch 4, welches als aktive Komponente die Verbindung der Formel

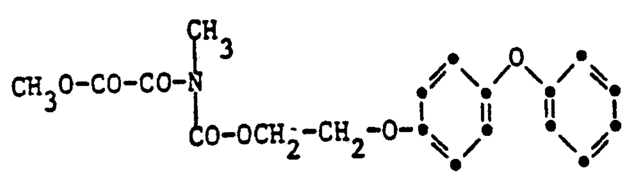

enthält.

17. Schädlingsbekämpfungsmittel gemäss Anspruch 4, welches als aktive Komponente die Verbindung der Formel

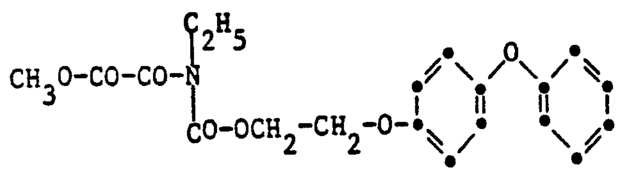

enthält.

18. Schädlingsbekämpfungsmittel gemäss Anspruch 4, welches als aktive Komponente die Verbindung der Formel

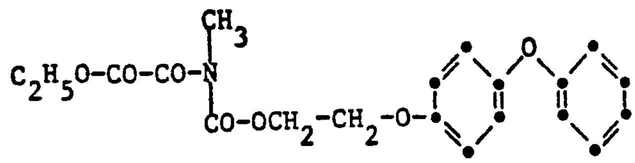

enthält.

19. Verfahren zur Herstellung einer Verbindung der Formel

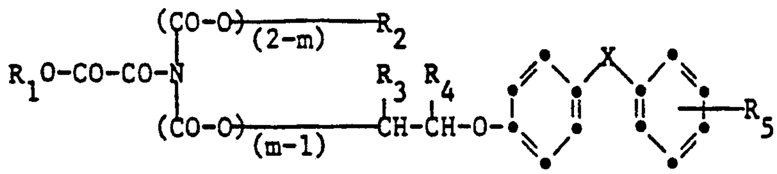

(I),

worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und
m die Zahlen 1 oder 2
bedeuten,
dadurch gekennzeichnet, dass man eine Verbindung der Formel II

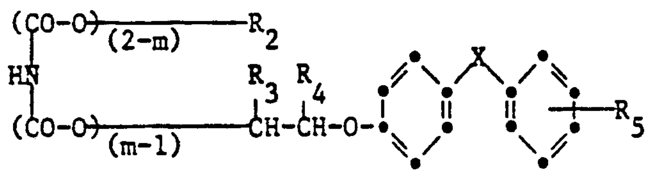

(II)

mit einer Verbindung der Formel III
$R_1O$-CO-CO-Hal (III)
umsetzt, wobei in den Formeln II und III die Symbole $R_1$, $R_2$, $R_3$, $R_4$, $R_5$, X und m die für Formel I angegebene Bedeutung haben und Hal für Halogen, vorzugsweise Chlor, steht.

20. Verwendung einer Verbindung der Formel I

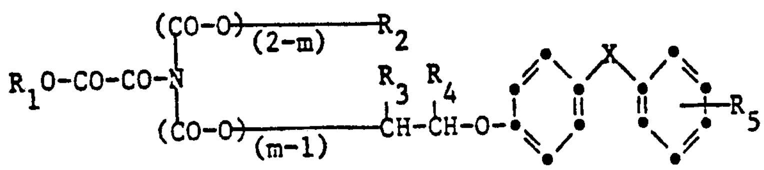

(I),

worin
$R_1$ $C_1$-$C_{10}$-Alkyl,
$R_2$ $C_1$-$C_4$-Alkyl,
$R_3$ und $R_4$ je Wasserstoff oder Methyl,
$R_5$ Wasserstoff, Halogen, $C_1$-$C_4$-Alkyl, $C_1$-$C_4$-Alkoxy, $C_1$-$C_4$-Alkylthio oder $C_1$-$C_4$-Halogenalkyl,
X Sauerstoff oder Schwefel und

m die Zahlen 1 oder 2
bedeuten, zur Bekämpfung von Schädlingen an Tieren und Pflanzen.

21. Verwendung gemäss Anspruch 20 einer Verbindung, die in den Ansprüchen 2 bis 18 als aktive Komponente beschrieben ist.

22. Verwendung gemäss einem der Ansprüche 20 und 21 zur Bekämpfung von Arthropoden, insbesondere Insekten und Arachniden.

23. Verwendung gemäss Anspruch 22 zur Bekämpfung von Larven und Eiern phytophager Schadinsekten und -milben.

**Claims** for the Contracting States BE CH DE FR GB IT LI NL

1. Compounds of the formula I

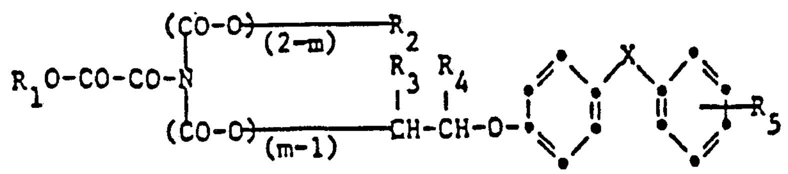 (I),

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, Cl-$C_4$-alkyl, Cl-$C_4$-alkoxy, $C_1$-$C_4$-alkylthio or $C_1$-$C_4$-haloalkyl,
X is oxygen or sulfur, and
m is 1 or 2.

2. Compounds of the formula I according to claim 1, wherein
$R_1$ is $C_1$-$C_6$-alkyl,
$R_2$ is $C_1$-$C_4$-alkyl,
$R_3$ and $R_4$ are each hydrogen or methyl,
$R_5$ is hydrogen or halogen,
X is oxygen or sulfur, and
m is 1 or 2.

3. Compounds of the formula I according to either claim 1 or claim 2, wherein
$R_1$ and $R_2$ are each $C_1$-$C_4$-alkyl,
$R_3$ and $R_4$ are each hydrogen or methyl,
$R_5$ is hydrogen or chlorine,
X is oxygen or sulfur, and
m is 1 or 2.

4. Compounds of the formula I according to any one of claims 1 to 3, wherein
$R_1$ and $R_2$ are each methyl or ethyl,
$R_3$, $R_4$ and $R_5$ are each hydrogen,
X is oxygen, and
m is 2.

5. A compound according to claim 3 of the formula

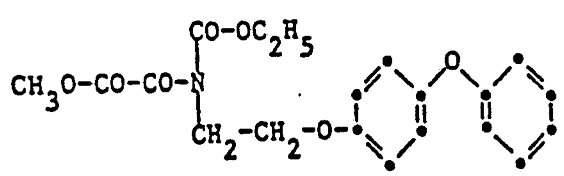 .

6. A compound according to claim 3 of the formula

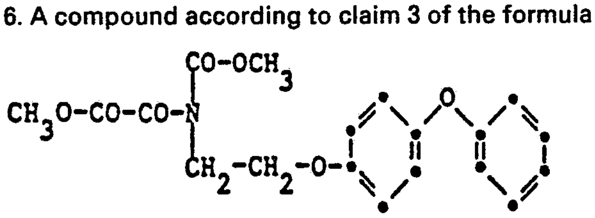 .

7. A compound according to claim 3 of the formula

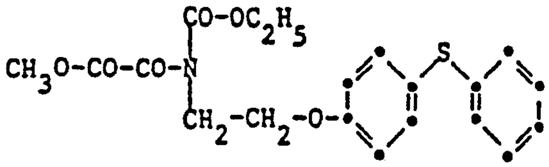
.

8. A compound according to claim 3 of the formula

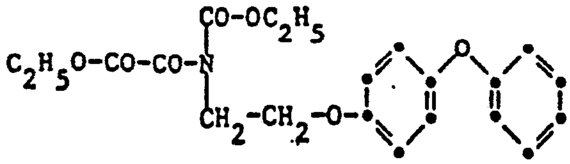
.

9. A compound according to claim 3 of the formula

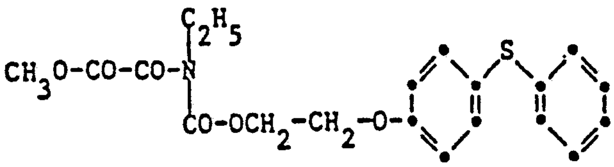
.

10. A compound according to claim 3 of the formula

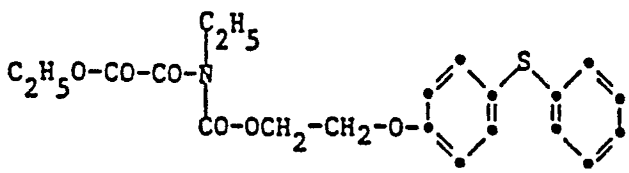
.

11. A compound according to claim 3 of the formula

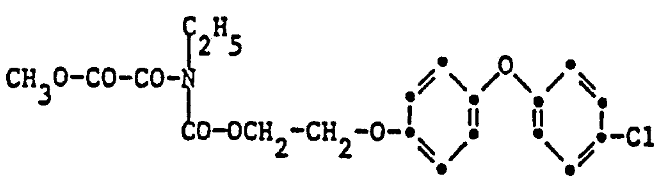
.

12. A compound according to claim 3 of the formula

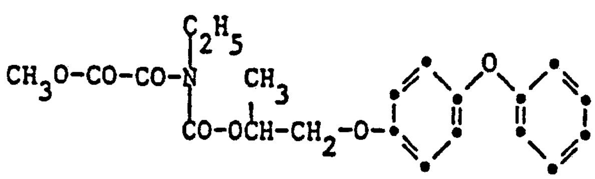
.

13. A compound according to claim 3 of the formula

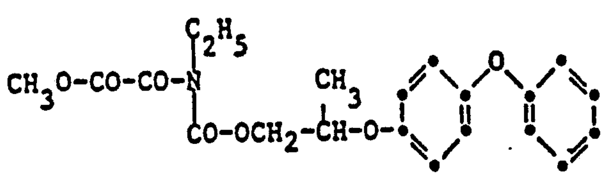
.

14. A compound according to claim 3 of the formula

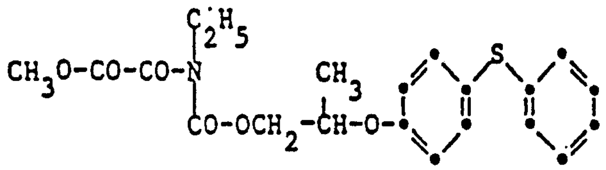 .

15. A compound according to claim 4 of the formula

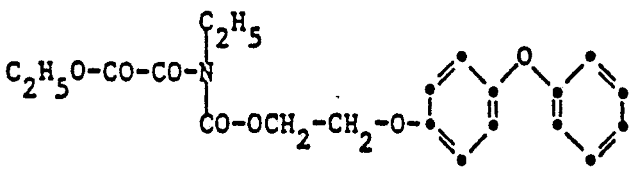 .

16. A compound according to claim 4 of the formula

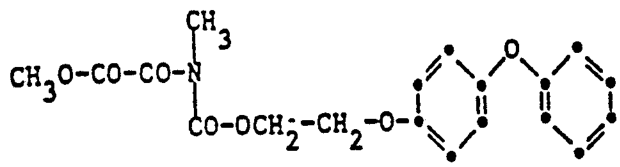 .

17. A compound according to claim 4 of the formula

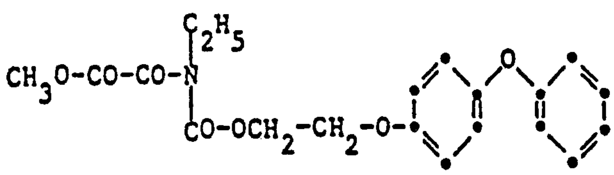 .

18. A compound according to claim 4 of the formula

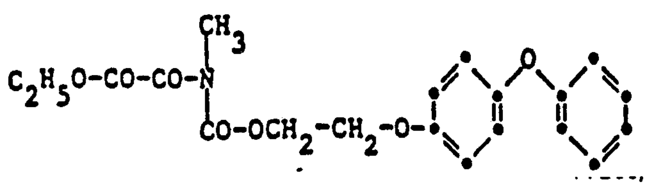 .

19. A process for producing a compound of the formula I

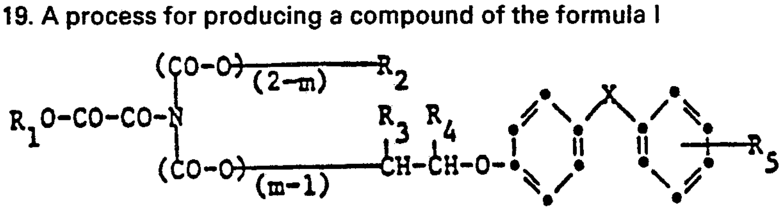 (I),

wherein
$R_1$ is $C_1$-$C_{10}$-alkyl,
$R_2$ is $C_1$-$C_4$-alkyl,

$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2,
characterised in that a compound of the formula II

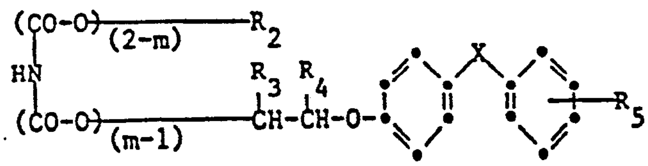

(II)

is reacted with a compound of the formula III
$R_1O$-CO-CO-Hal (III),
the symbols $R_1$, $R_2$, $R_3$, $R_4$, $R_5$, X and m in the formulae II and III having the meanings defined under formula I, and Hal being halogen, preferably chlorine.

20. A pesticidal composition containing as active ingredient a compound of the formula I

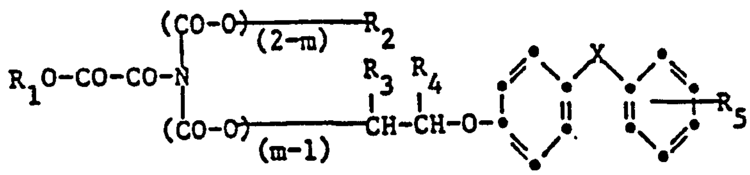

(I)

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-C4-alkoxy, $C_1$-$C_4$-alkylthio or $C_1$-$C_4$-haloalkyl,
X is oxygen or sulfur, and
m is 1 or 2,
together with suitable carriers and/or additives.

21. A pesticidal composition according to claim 20, which contains as active ingredient a compound according to any one of claims 2 to 18.

22. Use of a compound of the formula I

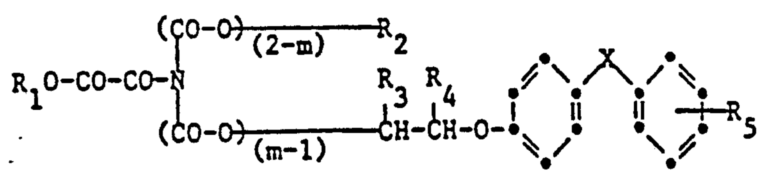

(I)

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2,
for controlling pests on animals and plants.

23. Use according to claim 22 of a compound according to any one of claims 2 to 18.

24. Use according to either of claims 22 and 23 for controlling Arthropoda, particularly insects and arachnids.

25. Use according to claim 24 for controlling larvae and eggs of phytophageous insect pests and mites.

26. A process for controlling pests on animals and plants, characterised in that the pests in their various development stages are brought into contact with a compound of the formula I

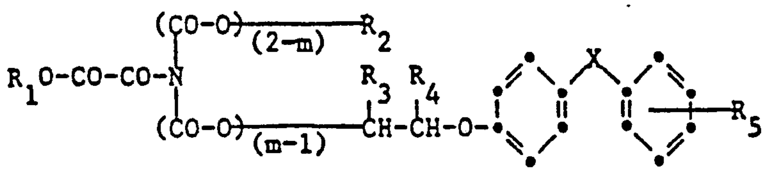

(I)

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2.

**Claims** for the Contracting State AT

1. A pesticidal composition containing as active ingredient a compound of the formula I

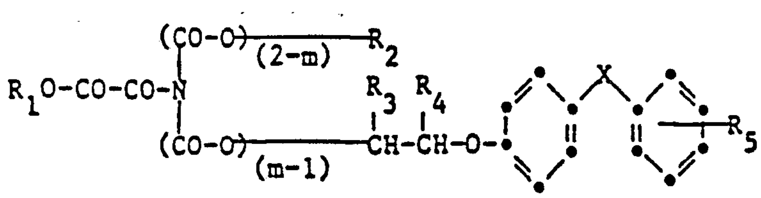

(I)

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2,
together with suitable carriers and/or additives.

2. A pesticidal composition according to claim 1 containing as active ingredient a compound of the formula I wherein
$R_1$ is $C_1$-$C_6$-alkyl,
$R_2$ is $C_1$-$C_4$-alkyl,
$R_3$ and $R_4$ are each hydrogen or methyl,
$R_5$ is hydrogen or halogen,
X is oxygen or sulfur, and
m is 1 or 2.

3. A pesticidal composition according to either claim 1 or claim 2 containing as active ingredient a compound of the formula I wherein
$R_1$ and $R_2$ are each $C_1$-$C_4$-alkyl,
$R_3$ and $R_4$ are each hydrogen or methyl,
$R_5$ is hydrogen or chlorine,
X is oxygen or sulfur, and
m is 1 or 2.

4. A pesticidal composition according to any one of claims 1 to 3 containing as active ingredient a compound of the formula I wherein
$R_1$ and $R_2$ are each methyl or ethyl
$R_3$, $R_4$ and $R_5$ are each hydrogen,
X is oxygen, and
m is 2.

5. A pesticidal composition according to claim 3 containing as active ingredient the compound of the formula

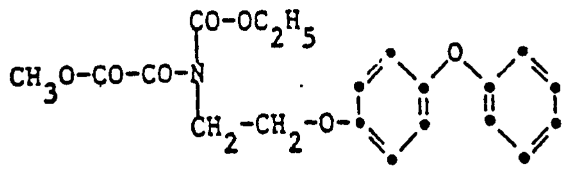
.

6. A pesticidal composition according to claim 3 containing as active ingredient the compound of the formula

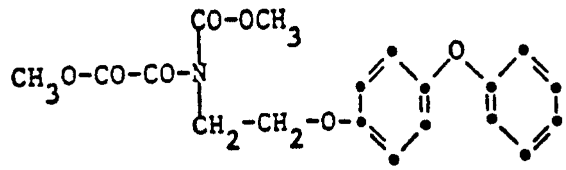
.

7. A pesticidal composition according to claim 3 containing as active ingredient the compound of the formula

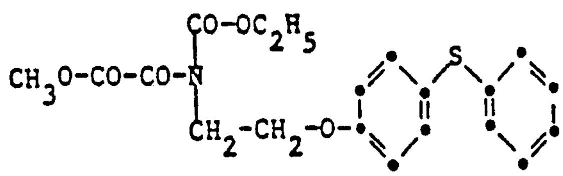
.

8. A pesticidal composition according to claim 3 containing as active ingredient the compound of the formula

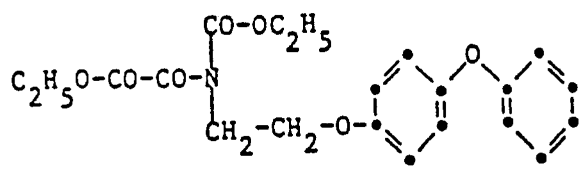
.

9. A pesticidal composition according to claim 3 containing as active ingredient the compound of the formula

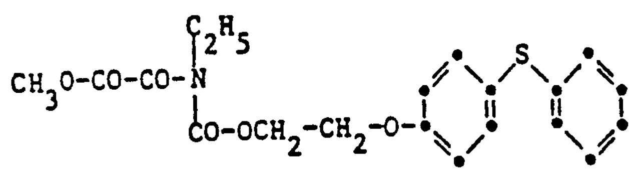
.

10. A pesticidal composition according to claim 3 containing as active ingredient the compound of the formula

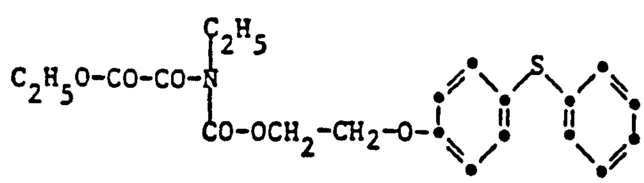
.

11. A pesticidal composition according to claim 3 containing as active ingredient the compound of the formula

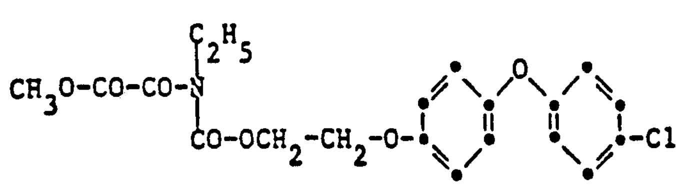
.

12. A pesticidal composition according to claim 3 containing as active ingredient the compound of the formula

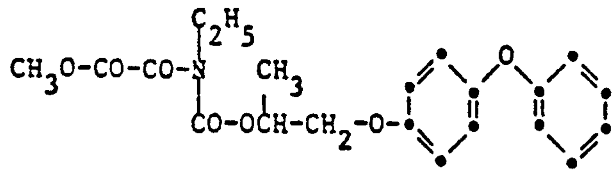

.

13. A pesticidal compostition according to claim 3 containing as active ingredient the compound of the formula

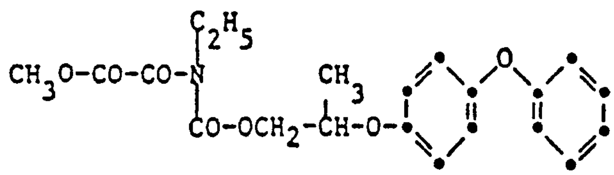

.

14. A pesticidal composition according to claim 3 containing as active ingredient the compound of the formula

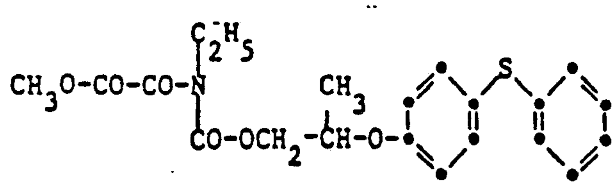

.

15. A pesticidal composition according to claim 4 containing as active ingredient the compound of the formula

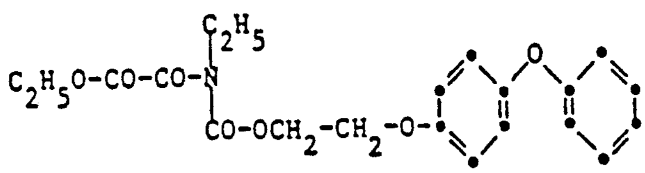

.

16. A pesticidal composition according to claim 4 containing as active ingredient the compound of the formula

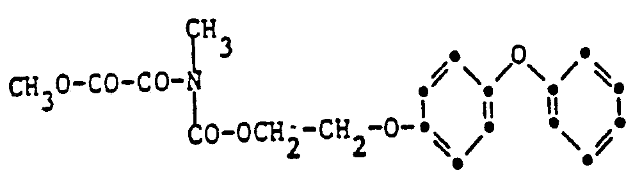

.

17. A pesticidal composition according to claim 4 containing as active ingredient the compound of the formula

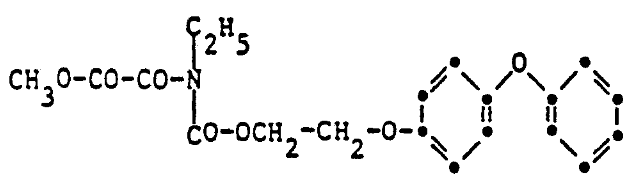

.

18. A pesticidal composition according to claim 4 containing as active ingredient the compound of the formula

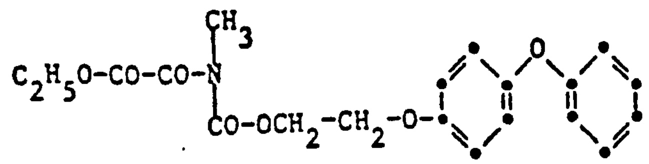

19. A process for producing a compound of the formula I

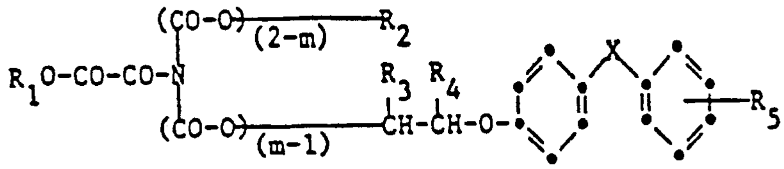 (I),

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2,
characterised in that a compound of the formula II

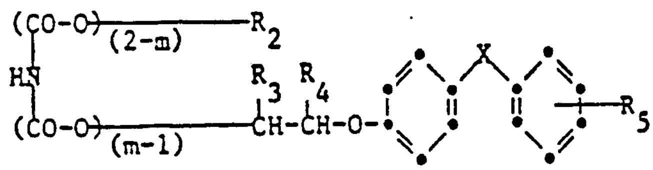 (II)

is reacted with a compound of the formula III
$R_1O$-CO-CO-Hal (III),
the symbols $R_1$, $R_2$, $R_3$, $R_4$, $R_5$, X and m in the formulae II and III having the meanings defined under formula I, and Hal being halogen, preferably chlorine.

20. Use of a compound of the formula I

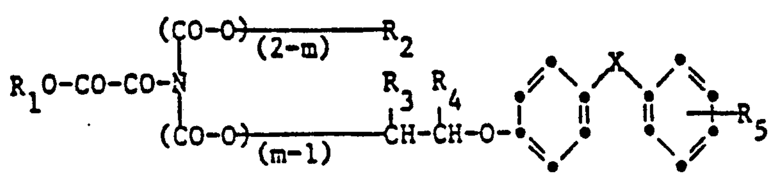 (I),

wherein
$R_1$ is $C_1$-$C_{10}$-alkyl,
$R_2$ is $C_1$-$C_4$-alkyl,
$R_3$ and $R_4$ are each hydrogen or methyl,
$R_5$ is hydrogen, halogen, $C_1$-$C_4$-alkyl, $C_1$-$C_4$-alkoxy, $C_1$-$C_4$-alkylthio or $C_1$-$C_4$-haloalkyl,
X is oxygen or sulfur, and
m is 1 or 2,
for controlling pests on animals and plants.

21. Use according to claim 20 of a compound that is described as active ingredient in claims 2 to 18.

22. Use according to either of claims 20 and 21 for controlling Arthropoda, particularly insects and arachnids.

23. Use according to claim 22 for controlling larvae and eggs of phytophageous insect pests and mites.

**Revendications** pour les Etats contractants BE CH DE FR GB IT LI NL

1. Composés de formule I

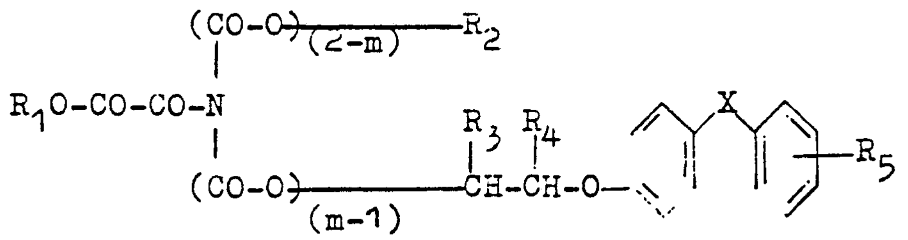

(I)

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou halogénoalkyle en $C_1$-$C_4$,
X représente l'oxygène ou le soufre et
m est égal à 1 ou 2.

2. Composés de formule I selon la revendication 1, dans lesquels
$R_1$ représente un groupe alkyle en $C_1$-$C_6$,
$R_2$ représente un groupe alkyle en $C_1$-$C_4$,
$R_3$ et $R_4$ représentent chacun l'hydrogène ou un groupe méthyle,
$R_5$ représente l'hydrogène ou un halogène,
X représente l'oxygène ou le soufre et
m est egal a 1 ou 2.

3. Composés de formule I selon l'une des revendications 1 ou 2, dans lesquels
$R_1$ et $R_2$ représentent chacun un groupe alkyle en $C_1$-$C_4$,
$R_3$ et $R_4$ représentent chacun l'hydrogène ou un groupe methyle,
$R_5$ représente l'hydrogène ou le chlore,
X représente l'oxygène ou le soufre et
m est égal à 1 ou 2.

4. Composés de formule I selon l'une des revendications 1 à 3, dans lesquels
$R_1$ et $R_2$ représentent chacun un groupe méthyle ou éthyle,
$R_3$, $R_4$ et $R_5$ représentent chacun l'hydrogène,
X représente l'oxygène et
m est égal à 2.

5. Composé selon la revendication 3, de formule

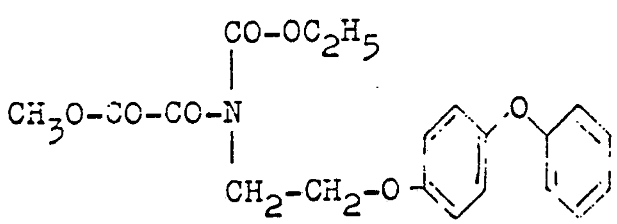

6. Composé selon la revendication 3, de formule

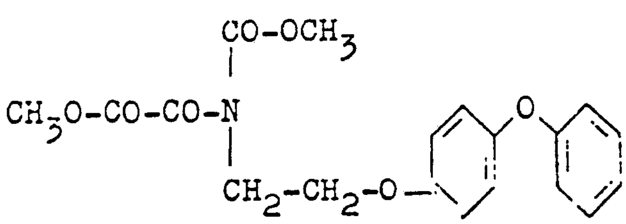

7. Composé selon la revendication 3, de formule

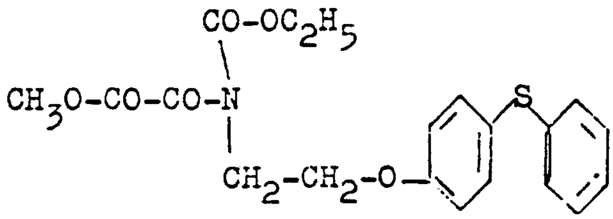

8. Composé selon la revendication 3, de formule

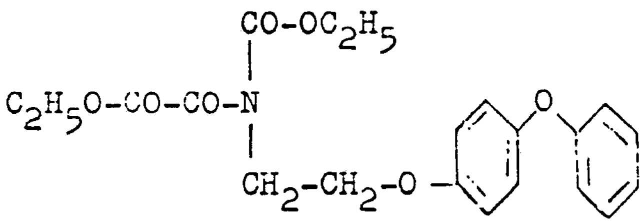

9. Composé selon la revendication 3, de formule

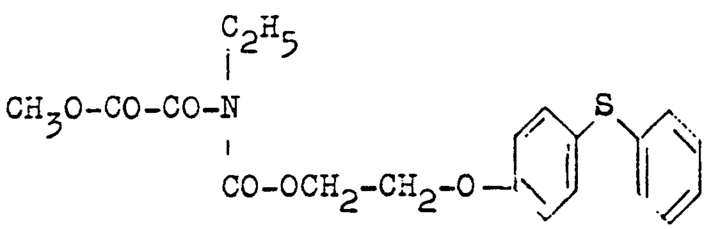

10. Composé selon la revendication 3, de formule

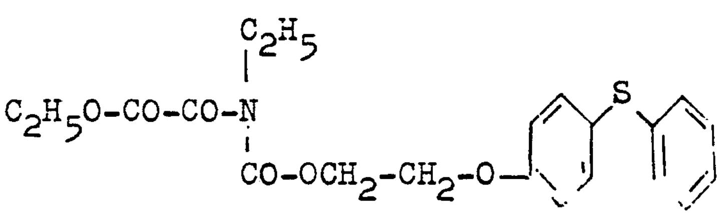

11. Composé selon la revendication 3, de formule

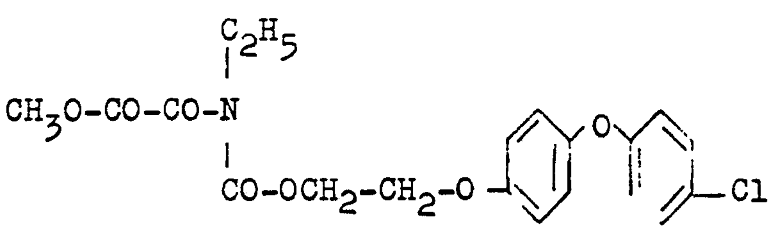

12. Composé selon la revendication 3, de formule

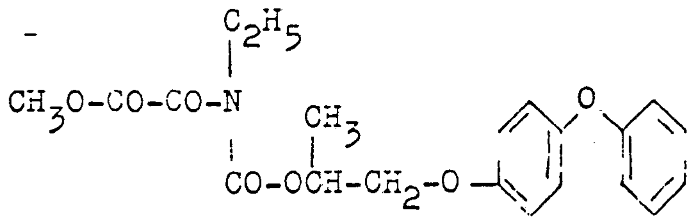

13. Composé selon la revendication 3, de formule

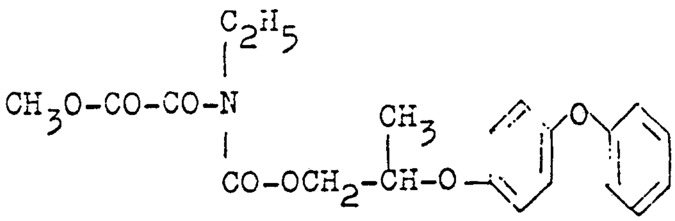

14. Composé selon la revendication 3, de formule

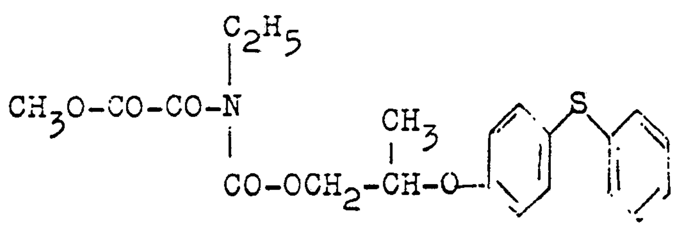

15. Composé selon la revendication 4, de formule

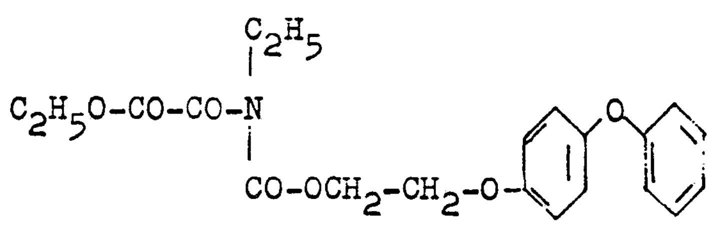

16. Composé selon la revendication 4, de formule

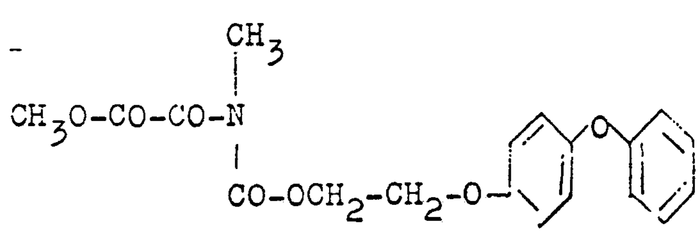

17. Composé selon la revendication 4, de formule

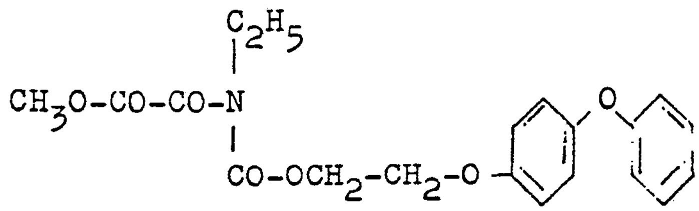

18. Composé selon la revendication 4, de formule

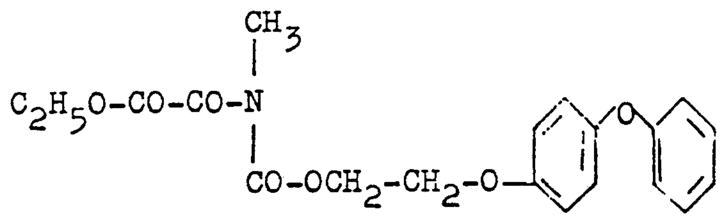

19. Procédé de preparation d'un composé de formule I

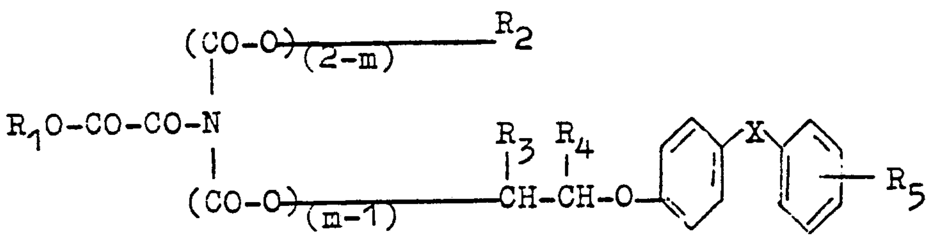

(I),

dans laquelle

$R_1$ représente un groupe alkyle en $C_1$-$C_{10}$,

$R_2$ représente un groupe alkyle en $C_1$-$C_4$,

$R_3$ et $R_4$ représentent chacun l'hydrogène ou un groupe méthyle,

$R_5$ représente l'hydrogène, un halogène, un groupe alkyle en $C_1$-$C_4$, alcoxy en $C_1$-$C_4$, alkylthio en $C_1$-$C_4$ ou halogénoalkyle en $C_1$-$C_4$,

X représente l'oxygène ou le soufre et

m est égal à 1 ou 2,

caractérisé en ce que l'on fait réagir un composé de formule II

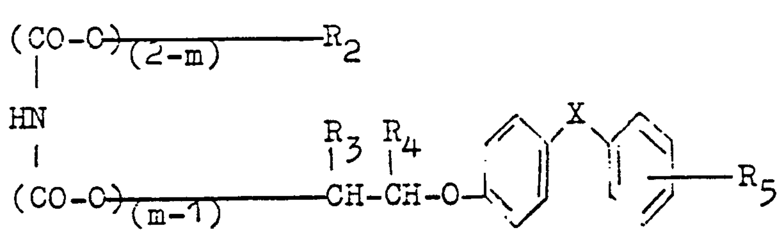

(II)

avec un composé de formule III

$R_1O$-CO-CO-Hal (III)

les symboles $R_1$, $R_{2,3}$, $R_4$, $R_5$, X et m ayant dans les formules II et III les significations indiquées en référence à la formule I et Hal représentant un halogène, de préférence le chlore.

20. Produit pesticide contenant en tant que composant actif un composé de formule I

FIG00/35

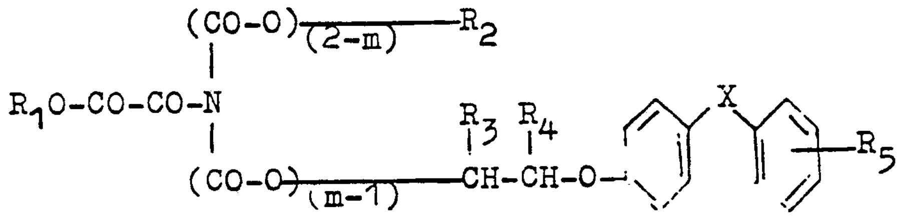

(I)

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$.$C_4$, alkylthio en $C_1$-$C_4$ ou halogénoalkyle en $C_1$-$C_4$,
X représente l'oxygène ou le soufre et
m est égal à 1 ou 2,
avec des véhicules et/ou des additifs appropriés.

21. Produit pesticide selon la revendication 20, contenant en tant que composant actif un composé selon l'une des revendications 2 à 18.

22. Utilisation d'un composé de formule I

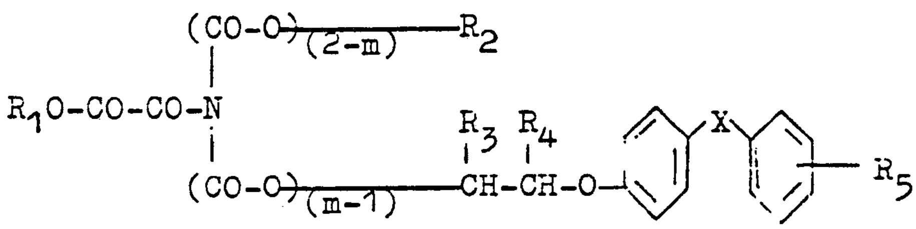

(I)

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou halogénalkyle en $C_1$-$C_4$,
X représente l'oxygène ou le soufre et
m est égal à 1 ou 2,
pour la lutte contre les parasites des animaux et des végétaux.

23. Utilisation selon la revendication 22 d'un composé selon l'une des revendications 2 à 18.

24. Utilisation selon l'une des revendications 22 et 23 pour la lutte contre les arthropodes, en particulier les insectes et les arachnides.

25. Utilisation selon la revendication 24 pour la lutte contre les larves et les oeufs d'insectes et acariens nuisibles phytophages.

26. Procédé pour combattre les parasites des animaux et des végétaux, caractérisé en ce que l'on met en contact les parasites, dans leurs divers stades de développement, avec un composé de formule I

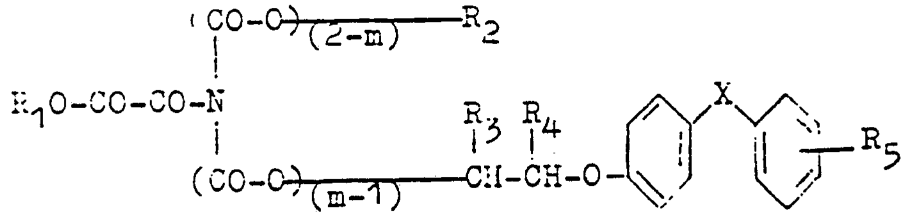

(I)

dans laquelle
$R_1$ représente un groupe alkyle en $C_1$-$C_{10}$,
$R_2$ représente un groupe/alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou

halogénoalkyle en $C_1$-$C_4$,
X représente l'oxygène ou le soufre et
m est égal à 1 ou 2.

**Revendications** pour l'Etat contractant AT

1. Produit pesticide contenant, en tant que composant actif, un composé de formule I

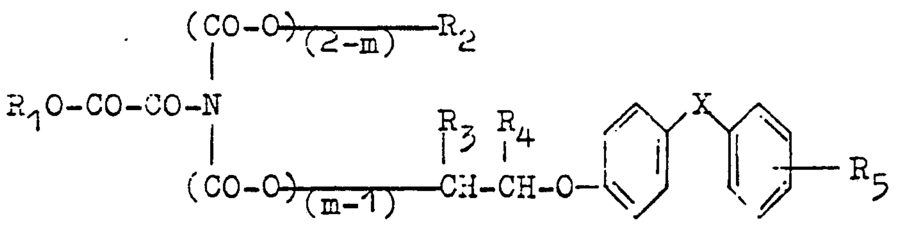

(I)

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou halogénoalkyle en $C_1$-$C_4$,
X représente l'oxygène ou le soufre et
m est égal à 1 ou 2,
avec des véhicules et/ou additifs appropriés.

2. Produit pesticide selon la revendication 1, contenant en tant que composant actif un composé de formule I dans laquelle
$R_1$ représente un groupe alkyle en $C_1$-$C_6$,
$R_2$ représente un groupe alkyle en $C_1$-$C_4$,
$R_3$ et $R_4$ représentent chacun l'hydrogène ou un groupe méthyle,
$R_5$ représente l'hydrogène ou un halogène,
X représente l'oxygène ou le soufre et
m est égal à 1 ou 2.

3. Produit pesticide selon l'une des revendications 1 ou 2, contenant en tant que composant actif un composé de formule I dans laquelle
$R_1$ et $R_2$ représentent chacun un groupe alkyle en $C_1$-$C_4$,
$R_3$ et $R_4$ représentent chacun l'hydrogène ou un groupe méthyle,
$R_5$ représente l'hydrogène ou le chlore,
X représente l'oxygène ou le soufre et
m est égal à 1 ou 2.

4. Produit pesticide selon l'une des revendications 1 à 3, contenant en tant que composant actif un composé de formule I dans laquelle
$R_1$ et $R_2$ représentent chacun un groupe méthyle ou éthyle,
$R_3$, $R_4$ et $R_5$ représentent chacun l'hydrogène,
X représente l'oxygène et
m est égal à 2.

5. Produit pesticide selon la revendication 3, contenant en tant que composant actif le composé de formule

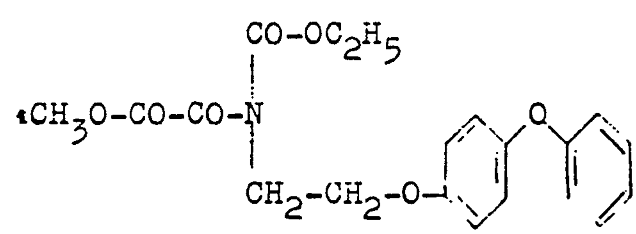

6. Produit pesticide selon la revendication 3, contenant en tant que composant actif le composé de formule

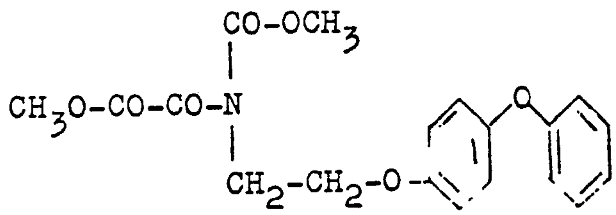

7. Produit pesticide selon la revendication 3, contenant en tant que composant actif le composé de formule

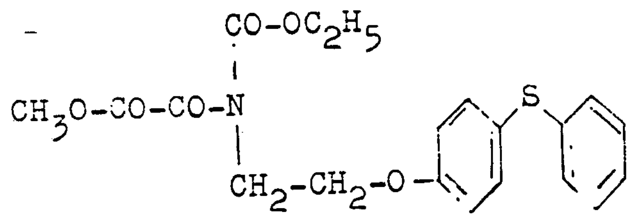

8. Produit pesticide selon la revendication 3, contenant en tant que composant actif le composé de formule

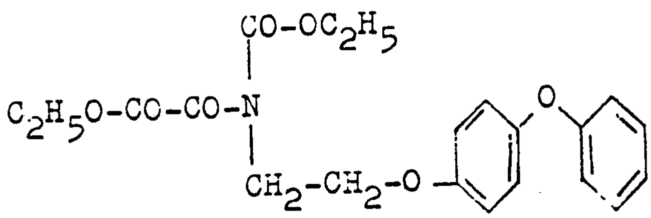

9. Produit pesticide selon la revendication 3, contenant en tant que composant actif le composé de formule

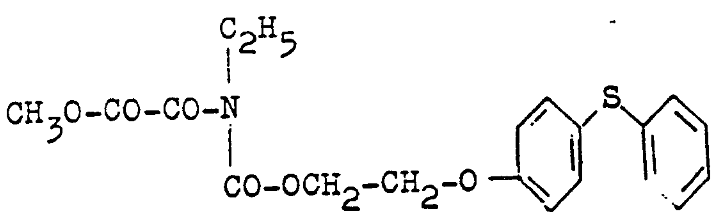

10. Produit pesticide selon la revendication 3, contenant en tant que composant actif le composé de formule

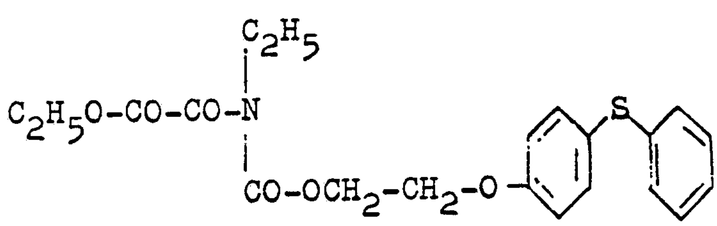

11. Produit pesticide selon la revendication 3, contenant en tant que composant actif le composé de formule

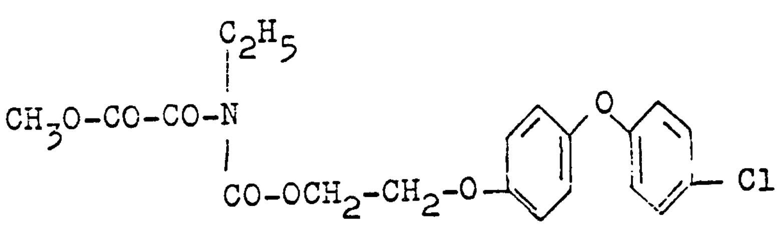

12. Produit pesticide selon la revendication 3, contenant en tant que composant actif le composé de formule

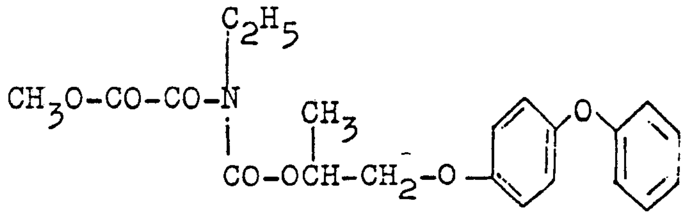

13. Produit pesticide selon la revendication 3, contenant en tant que composant actif le composé de formule

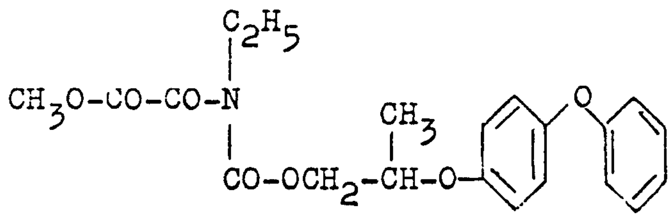

14. Produit pesticide selon la revendication 3, contenant en tant que composant actif le composé de formule

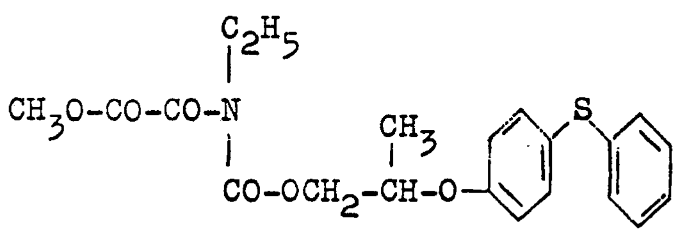

15. Produit pesticide selon la revendication 4, contenant en tant que composant actif le composé de formule

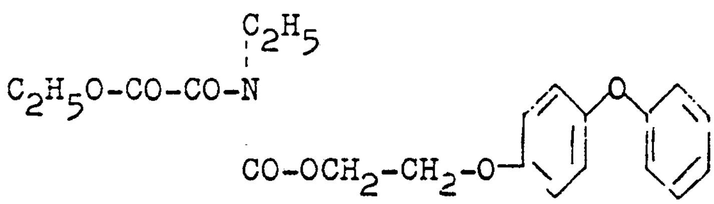

16. Produit pesticide selon la revendication 4, contenant en tant que composant actif le composé de formule

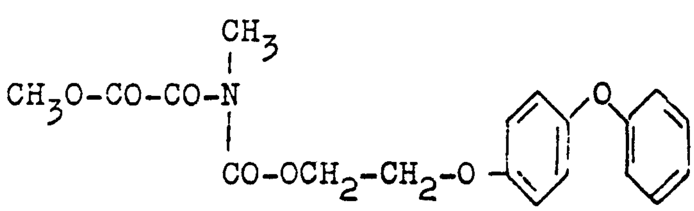

17. Produit pesticide selon la revendication 4, contenant en tant que composant actif le composé de formule

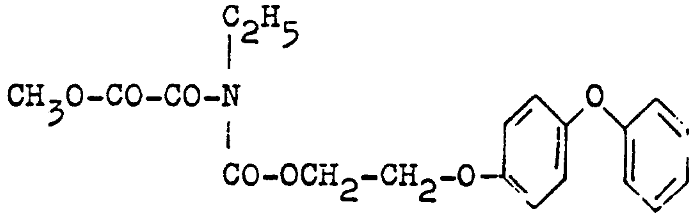

18. Produit pesticide selon la revendication 4, contenant en tant que composant actif le composé de formule

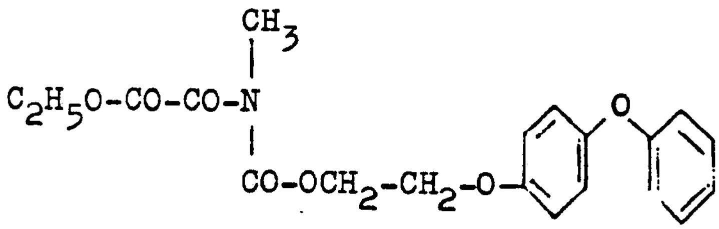

19. Procédé de préparation d'un composé de formule I

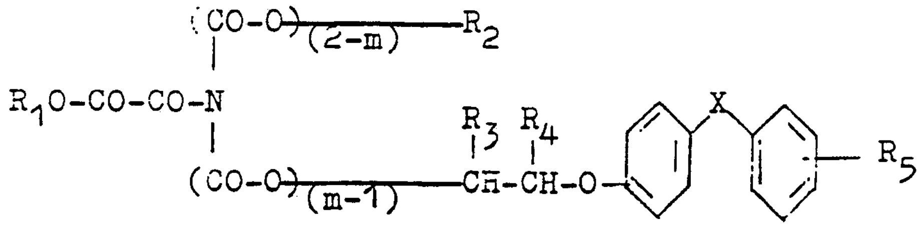
(I)

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou halogénoalkyle en $C_1$-$C_4$,
X représente l'oxygène ou le soufre et
m est égal à 1 ou 2,
caractérisé en ce que l'on fait reagir un composé de formule II

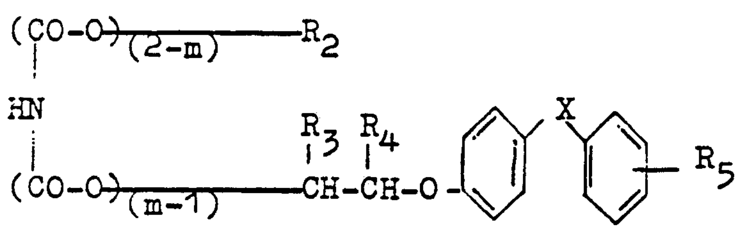
(II)

avec un composé de formule III
$R_1O$-CO-CO-Hal (III)
les symboles $R_1$, $R_2$, $R_3$, $R_4$, $R_5$, X et m ayant dans les formules II et III les significations indiquées en référence à la formule I, et Hal représentant un halogène, de préférence le chlore.
20. Utilisation d'un composé de formule I

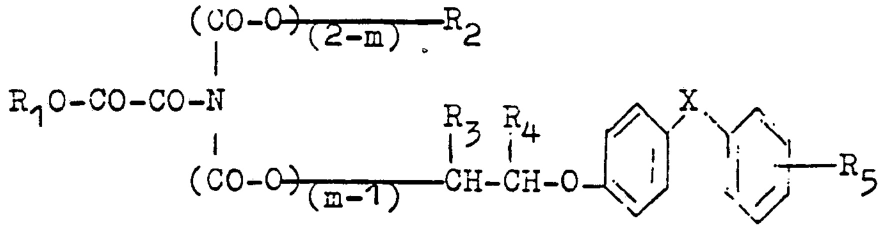
(I),

dans laquelle
$R_1$ représente un groupe alkyle en $C_1$-$C_{10}$,
$R_2$ représente un groupe alkyle en $C_1$-$C_4$,
$R_3$ et $R_4$ représentent chacun l'hydrogène ou un groupe méthyle,
$R_5$ représente l'hydrogène, un halogène, un groupe alkyle en $C_1$-$C_4$, alcoxy en $C_1$-$C_4$, alkylthio en $C_1$-$C_4$ ou halogénoalkyle en $C_1$-$C_4$,
X représente l'oxygène ou le soufre et
m est égal à 1 ou 2,
pour la lutte contre les parasites des animaux et des végétaux.

21. Utilisation selon la revendication 20 d'un composé décrit en tant que composant actif dans les revendications 2 à 18.

22. Utilisation selon l'une des revendications 20 et 21 pour la lutte contre les arthropodes, en particulier les insectes et les arachnides.

23. Utilisation selon la revendication 22, pour la lutte contre les larves et les oeufs d'insectes et d'acariens nuisibles phytophages.